# EUROPÄISCHE PATENTSCHRIFT

(11) **EP 2 093 169 B1**
(45) Veröffentlichungstag und Bekanntmachung des Hinweises auf die Patenterteilung: **03.11.2010**
(21) Anmeldenummer: 08022035.3
(22) Anmeldetag: 18.12.2008
(51) Int. Cl.: B65G 29/00, B65G 47/84

(54) **Sternradförderer**
Star wheel transporter
Transporteur de type roue étoilée

(30) Priorität: 23.02.2008 DE 102008010894
(43) Veröffentlichungstag der Anmeldung: 26.08.2009
(73) Patentinhaber: Krones AG, 93073 Neutraubling (DE)
(72) Erfinder: Braun, Franz, 92421 Schwandorf (DE); Laumer, Roland, 93047 Regensburg (DE); Schmid, Manfred, 93089 Aufhausen (DE)
(74) Vertreter: Grünecker, Kinkeldey, Stockmair & Schwanhäusser Anwaltssozietät

(56) Entgegenhaltungen:
- EP-A- 0 736 467
- DE-B3-102005 058 156
- DE-U1- 9 301 126
- JP-A- 61 211 220
- US-A- 1 981 641
- US-A- 4 093 052

## Beschreibung

Die Erfindung bezieht sich auf einen Sternradförderer der im Oberbegriff von Anspruch 1 erläuterten Art.

Ein derartiger Sternradförderer ist aus der WO 2006/087088 bekannt. Beim bekannten Sternradförderer ist das Stemrad auf Auslegern lösbar befestigt, die sich von einer Polygonnabe nach außen erstrecken. Der Antriebsmotor ist mit einer Polygonwelle versehen, auf die die Polygonnabe aufgesteckt und fixiert wird. Die Abdichtung zum Steminnenraum erfolgt über ineinandergreifende hülsenartige Bauteile, die sich bei der Höheneinstellung des Sterns verschieben. Die Höhe wird über eine Stellschraube eingestellt. Nachteilig an dieser bekannten Ausgestaltung mit einer Drehmomentübertragung über eine Polygonverbindung sind die hohen Fertigungskosten, die vielen Einzelteile, die beschwerliche Montage und Demontage, da nur eine einzige Fügeposition möglich ist, die spielbehaftete Verbindung, die einerseits ungenau ist und andererseits zu Kontaktkorrosion führen kann, und die Notwendigkeit, dass die Abdichtung den gesamten Höhenverstellbereich abdecken muss.

Ein weiterer Sternradförderer ist aus der JP-A-61 211220 bekannt. Bei diesem Sternradförderer sitzt das Sternrad über eine herkömmliche Passfederverbindung auf der Antriebswelle.

Hydraulische Spannvorrichtungen zum Befestigen von Bauteilen an einer Antriebswelle sind im Prinzip bekannt, so beispielsweise aus der US-A-4 093 052 oder der DE-B-10 2005 058 156 bzw. der WO 98/46896. Diese bekannten Spannvorrichtungen sind jedoch als gesonderte Druckhülsen ausgebildet, die zwischen die zu befestigenden Teile eingesetzt werden und nur zur Verwendung mit horizontal liegenden Wellen beschrieben.

Der Erfindung liegt die Aufgabe zugrunde, einen Sternradförderer mit einer verbesserten Stemradbefestigung bereitzustellen.

Die Aufgabe wird durch die im Anspruch 1 angegebenen Merkmale gelöst.

Durch die erfindungsgemäße Ausgestaltung wird sowohl die Montage als auch die Höheneinstellung entscheidend verbessert. Durch den Einsatz einer hydraulischen Spanneinrichtung kann das Stemrad auf einfache Weise montiert und demontiert sowie in der gewünschten Höhenlage fixiert werden, allein durch Druckerhöhung oder durch Druckemiedrigung. Falls erforderlich kann auch eine radiale Verstellung vorgenommen werden, um die Behälterübergabe zum benachbarten Stemrad einzustellen.

Als hydraulische Spanneinrichtung wird eine Spanneinrichtung eingesetzt, die einen von einer inneren und einer äußeren Spannhülse begrenzten Druckraum aufweist, der mit einer Druckeinstelleinrichtung verbunden ist, und eine Befestigungsnabe zum Befestigen des Sternrades enthält.

An dieser Nabe können die auch bislang verwendeten Ausleger zum lösbaren Anbringen des Sternrades auf einfache Weise angebracht werden; so z.B. derart, dass die Ausleger in Bohrungen der Befestigungsnabe eingesetzt, bevorzugt eingeschrumpft sind. Anschließend können die Ausleger spanend bearbeitet werden.

Erfindungsgemäß wird die Antriebswelle durch eine Abdeckung geführt, bevor sie den Antriebsmotor trifft. Um die Höhenverstellung des Sternrades zu erleichtern, ragt die Antriebswelle über die Abdichtung so weit hinaus, wie es der erforderlichen Verstelllänge entspricht, so dass die Höhenverstellung des Sternrades ohne gleichzeitige Bewegung der Abdichtung möglich ist.

Ein Ausführungsbeispiel der Erfindung wird nachfolgend anhand der Zeichnungen näher erläutert. Es zeigen:
- Fig. 1: eine perspektivische, schematische Darstellung eines Ausführungsbeispiels eines Stemradförderers,
- Fig. 2: den Längsschnitt durch die Stemradbefestigung des Stemradförderers,
- Fig. 3: eine Teildarstellung in Seitenansicht und verkleinertem Maßstab der Sternradbefestigung,
- Fig. 4: eine perspektivische Darstellung der Befestigungsnabe, und
- Fig. 5: einen Schnitt durch die Befestigungsnabe.

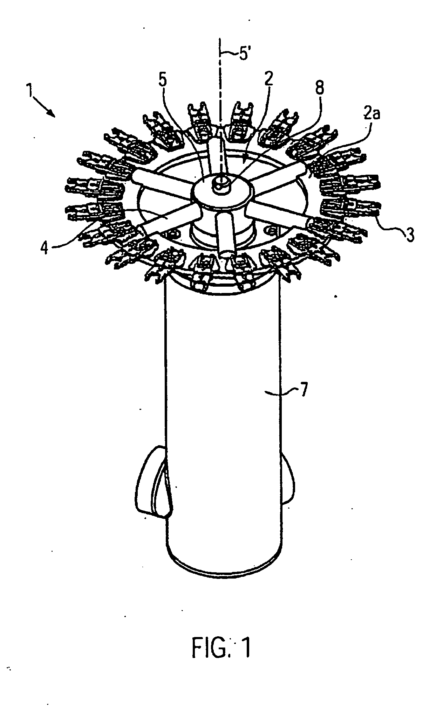

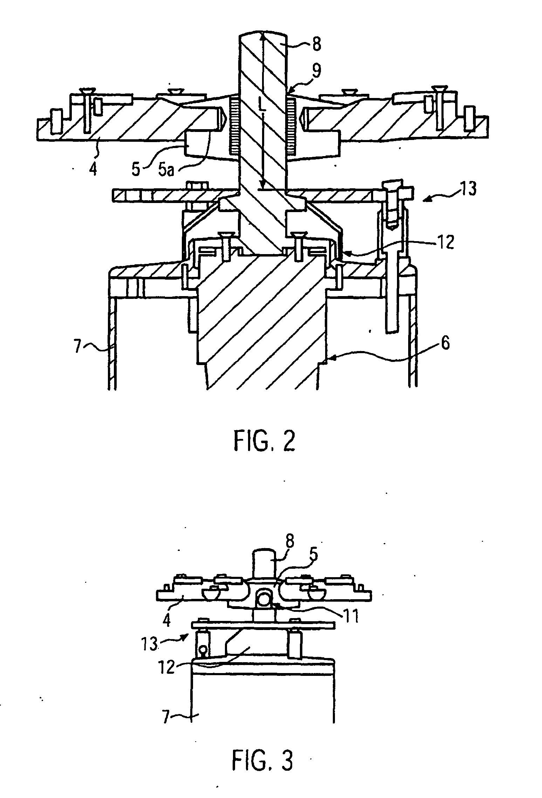

Fig. 1 zeigt in perspektivischer und schematischer Darstellung einen Sternradförderer 1, bei dem die Erfindung verwirklicht werden kann. Der dargestellte Sternradförderer 1 ist für eine hängende Förderung nicht dargestellter Gegenstände, beispielsweise Getränkebehälter, wie Flaschen oder dgl., ausgerüstet und enthält zu diesem Zweck ein Stemrad 2, das mit einem Sternkranz 2a mit einer Vielzahl umfangsseitig vorstehender Halterungen 3 für die zu fördernden Gegenstände ausgerüstet ist. Im dargestellten Ausführungsbeispiel sind die Halterungen 3 für eine hängende Förderung von Flaschen vorgesehen, wobei zangenartige Halterungselemente die Flaschen im Halsbereich unter einem zu diesem Zweck vorgesehenen Wulst untergreifen. Der Sternkranz 2a mit den Halterungen 3 ist auf Auslegern 4 befestigt, die sternförmig von einer Befestigungsnabe 5 abstehen, die um eine im Wesentlichen vertikale Achse 5' drehend angetrieben ist. Der Antrieb erfolgt über einen Antriebsmotor 6 (Fig. 2), der im Inneren eines Traggestelles 7, hier in Form einer Tragsäule, untergebracht ist, und eine Antriebswelle 8, die stehend angeordnet ist und einen kreisförmigen Querschnitt aufweist..

Der Sternkranz 2a ist auf den Auslegern 4 bevorzugt auswechselbar befestigt, beispielsweise in der im DE-GM 93 01 126 beschriebenen Art und Weise. Die Ausleger 4 sind fest mit der Nabe 5 verbunden, bevorzugt in Bohrungen 5a der Nabe eingeschrumpft, sind. Nach dem Einschrumpfen können die Ausleger 4 nach Bedarf bearbeitet, insbesondere spanend bearbeitet werden.

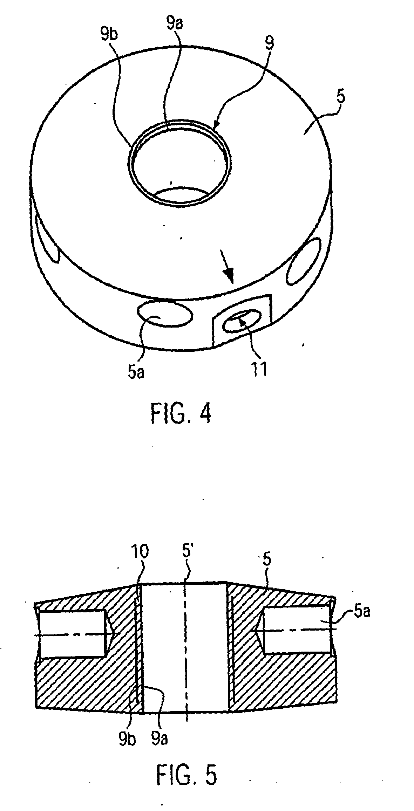

Die Nabe 5 ist mit einer hydraulischen Spanneinrichtung 9 versehen (Fig. 4). Die hydraulische Spanneinrichtung kann beispielsweise von derjenigen Art sein, wie sie in der WO 98/46896 beschrieben ist. Die hydraulische Spanneinrichtung 9 enthält, wie in den Fig. 4 und 5 nur angedeutet, eine innere Hülse 9a, deren Innendurchmesser an den Außendurchmesser der Antriebswelle 8 so angepasst ist, dass die innere Hülse 9a über die Antriebswelle 8 geschoben werden kann, jedoch kaum Spiel aufweist. Die hydraulische Spanneinrichtung 9 enthält weiterhin eine äußere Hülse 9b, die mit der inneren Hülse 9a einen Druckraum 10 einschließt, der sich ringsum die Achse 5' erstreckt. Im Druckraum 10 ist ein Druckmedium enthalten, das über eine Druckeinstelleinrichtung 11 unter Druck gesetzt und entlastet werden kann. Wird das Druckmedium im Druckraum 10 unter Druck gesetzt, so presst es die innere Hülse 9a gegen die Antriebswelle 8, so dass die Nabe 5 auf der Antriebswelle 8 festgeklemmt wird.

Die Druckeinstelleinrichtung 11 ist im dargestellten Ausführungsbeispiel eine einzige Schraube, die den Druckraum 10 beim Einschrauben verkleinert und dadurch den Druck erhöht. Durch Feststellen des Drehmomentes zum Einschrauben kann die Druckerhöhung auf einen bestimmten Wert festgelegt werden.

Die Nabe 5 ist derart mit der äußeren Hülse 9b verbunden, dass beim Festklemmen der hydraulischen Spanneinrichtung 9 auch die Nabe 5 unverrückbar festsitzt.

Die Antriebswelle 8 erstreckt sich vom Motor 6 durch eine Abdeckung 12 nach oben aus dem Traggestell 7, d.h. der Tragsäule, über eine Länge L hinaus. Die Länge L ist so bemessen, dass sie gleich oder größer ist als die erforderliche Verstelllänge für eine Höhenverstellung des Sternrades 2 bzw. der Nabe 5. Die Abdeckung 12 ist in Höhenrichtung gesehen stationär und am Traggestell 7 befestigt. Auf diese Weise ist eine äußerst einfache Abdichtung des Motors 6 zu erreichen, die in allen Höhenstellungen des Sternrades 2 gleichermaßen optimal wirksam ist.

Die Halterung 13 dient zur Befestigung von benötigten Bauteilen zur Behälterübergabe.

Die Höhenverstellung des Sternrades 2 kann durch eine nicht dargestellte Montagehilfe eingestellt, die das Stemrad 2 in der gewünschten Höhenposition, die beispielsweise für den jeweils gewählten Behälter optimal ist, so lange festhält, bis die hydraulische Spanneinrichtung zum Festklemmen der Nabe 5 betätigt wurde.

In Abwandlung des beschriebenen und gezeichneten Ausführungsbeispiels kann die erfindungsgemäße Ausgestaltung auch bei anderen Sternradförderern, beispielsweise bei Stemradförderem für eine bodenunterstützte Förderung oder bei Stemradförderem, die auf einem Tisch oder dgl. untergebracht sind, eingesetzt werden. Die hydraulische Spanneinrichtung kann eine abweichende Konstruktion aufweisen, wie sie im Stand der Technik bekannt ist.

## Patentansprüche

1. Sternradförderer (1) mit einer Antriebswelle (8), auf der ein Sternrad (2) mit Hilfe einer Nabe (5) lösbar befestigt ist, **dadurch gekennzeichnet, dass** die Nabe (5) mit einer hydraulischen Spanneinrichtung (9) versehen ist, mit der das Sternrad (2) auf der Antriebswelle (8) befestigt ist, wobei die hydraulische Spanneinrichtung (9) eine innere und eine äußere Spannhülse (9a, 9b) aufweist, die einen Druckraum (10) begrenzen, der mit einer Druckeinstelleinrichtung (11) verbunden ist und wobei die äußere Spannhülse (9b) mit der Nabe (5) verbunden und die Druckeinstelleinrichtung (11) in der Nabe (5) vorgesehen ist.

2. Sternradförderer nach Anspruch 1, **dadurch gekennzeichnet, dass** die Druckeinstelleinrichtung (11) eine Druckschraube aufweist.

3. Sternradförderer nach Anspruch 1 oder 2, **dadurch gekennzeichnet, dass** mit der Befestigungsnabe (5) Ausleger (4) zum Anbringen des Sternradkranzes (2a) verbunden sind.

4. Sternradförderer nach Anspruch 3, **dadurch gekennzeichnet, dass** die Ausleger (4) in Bohrungen (5a) der Befestigungsnabe (5) eingesetzt sind.

5. Sternradförderer nach Anspruch 4, **dadurch gekennzeichnet, dass** die Ausleger (4) in den Bohrungen (5a) eingeschrumpft sind.

6. Sternradförderer nach einem der Ansprüche 3 bis 5, **dadurch gekennzeichnet, dass** die Ausleger (4) nach dem Einschrumpfen spanend bearbeitet wurden.

7. Sternradförderer nach einem der Ansprüche 1 bis 6, **dadurch gekennzeichnet, dass** die Antriebswelle (8) durch eine Abdichtung (12) geführt ist, hinter der ein Antriebsmotor (6) angeordnet ist, wobei anstelle des Antriebsmotors (6) auch ein anderes Antriebselement, wie z. B. eine Gelenkwelle, zum Einsatz kommen kann.

8. Sternradförderer nach Anspruch 7, **dadurch gekennzeichnet, dass** die Antriebswelle (8) an der dem Antriebsmotor (6) abgewandten Seite um eine Länge (L) über der Abdichtung (12) übersteht, die gleich oder größer als eine zur Höhenverstellung des Sternrads (2) erforderliche Verstelllänge ist.

## Claims

1. Star wheel conveyor (1) with a drive shaft (8), which is detachably mounted with the help of a hub (5), **characterized by,** that the hub (5) is provided with a hydraulic tensioning device (9), with which the star wheel (2) is mounted on the drive shaft (8), whereby the hydraulic tensioning device (9) is provided with an inner and an outer clamping sleeve (9a, 9b), which delimit a pressure chamber (10) that is connected with a pressure adjusting device (11), and whereby the outer clamping sleeve (9b) is connected with the hub (5) and the pressure adjustment device (11) is provided in the hub (5).

2. Star wheel conveyor according to Claim 1, **characterized by**, that the pressure setting device (11) is provided with a pressure screw.

3. Star wheel conveyor according to claim 1 or 2, **characterized by**, that cantilever arms (4) are connected with the mounting hub (5) for attaching the star wheel gear rim (2a).

4. Star wheel conveyor according to Claim 3, **characterized by**, that the cantilever arms (4) are inserted into bores (5a) of the mounting hub (5).

5. Star wheel conveyor according to Claim 4, **characterized by**, that the cantilever arms (4) are contracted in bores (5a).

6. Star wheel conveyor according to one of claims 3 to 5, **characterized by**, that the cantilever arms after being attached by contracting (4) have been finished machinable.

7. Star wheel conveyor belt according to one of claims I to 6, **characterized by**, that the drive shaft (8) is guided through a gasket seal (12) behind which a drive motor (6) is located, whereby in place of the drive motor (6), a different drive element such as, for example, an articulated shaft can also be used.

8. Star wheel conveyor belt according to Claim 7, **characterized by**, that the drive shaft (8) extends beyond the gasket seal (12) by a length (L) on the side facing away from the drive motor (6), which is equal to or larger than an adjustment length that is required for a vertical adjustment of the star wheel (2).

## Revendications

1. Transporteur à roue en étoile (1) avec un arbre d'entraînement (8) sur lequel une roue en étoile (2) est fixée de manière amovible à l'aide d'un moyeu (5), **caractérisé en ce que** le moyeu (5) est pourvu d'un dispositif de serrage hydraulique (9) avec lequel la roue en étoile (2) est fixée sur l'arbre d'entraînement (8), le dispositif de serrage hydraulique (9) présentant des manchons de serrage intérieur et extérieur (9a, 9b) qui délimitent un espace de pression (10) relié à un dispositif de réglage de pression (11), et le manchon de serrage extérieur (9b) étant relié au moyeu (5) et le dispositif de réglage de pression (11) étant prévu dans le moyeu (5).

2. Transporteur à roue en étoile selon la revendication 1, **caractérisé en ce que** le dispositif de réglage de pression (11) comporte une vis de pression.

3. Transporteur à roue en étoile selon la revendication 1 ou 2, **caractérisé en ce que** des bras (4) destinés au montage de la couronne de roue en étoile (2a) sont reliés au moyeu de fixation (5).

4. Transporteur à roue en étoile selon la revendication 3, **caractérisé en ce que** les bras (4) sont placés dans des perçages (5a) du moyeu de fixation (5).

5. Transporteur à roue en étoile selon la revendication 4, **caractérisé en ce que** les bras (4) sont introduits dans les perçages (5a) par frettage.

6. Transporteur à roue en étoile selon l'une des revendications 3 à 5, **caractérisé en ce que** les bras (4), après le frettage, sont soumis à un usinage par enlèvement de copeaux.

7. Transporteur à roue en étoile selon l'une des revendications 1 à 6, **caractérisé en ce que** l'arbre d'entraînement (8) traverse un joint d'étanchéité (12) derrière lequel est disposé un moteur d'entraînement (6), un autre élément d'entraînement comme par exemple un arbre articulé pouvant aussi être utilisé à la place du moteur d'entraînement (6).

8. Transporteur à roue en étoile selon la revendication 7, **caractérisé en ce que** l'arbre d'entraînement (8), sur son côté opposé au moteur d'entraînement (6), dépasse du joint d'étanchéité (12) d'une longueur (L) qui est égale ou supérieure à une longueur de réglage nécessaire au réglage en hauteur de la roue en étoile (2).
